# EUROPEAN PATENT SPECIFICATION

(11) **EP 3 933 450 B1**
(45) Date of publication and mention of the grant of the patent: **30.10.2024**
(21) Application number: 21180796.1
(22) Date of filing: 22.06.2021
(51) Int. Cl.: G01V 1/00, H04W 4/90, G08B 21/10

(54) **WARNING METHOD FOR WARNING OF THE IMMINENT OCCURENCE OF SEISMIC EVENTS**
WARNMETHODE ZUM WARNEN VOR DEM BEVORSTEHENDEN AUFTRETEN VON SEISMISCHEN EREIGNISSEN
MÉTHODE D'ALERTE POUR ALERTER D'UNE OCCURRENCE IMMINENTE D'ÉVÉNEMENTS SISMIQUES

(30) Priority: 30.06.2020 IT 202000015730
(43) Date of publication of application: 05.01.2022
(73) Proprietor: Congiu, Ignazio, 00071 Pomezia (IT)
(72) Inventor: Congiu, Ignazio, 00071 Pomezia (IT)
(74) Representative: Mari, Marco Giovanni

(56) References cited:
- EP-A1- 0 967 493
- EP-A1- 2 768 207
- WO-A1-2017/083556
- JP-A- 2009 146 098
- US-A1- 2018 329 377

## Description

### Technical field of the invention

The invention relates to the technical sector of environmental monitoring and warning systems.

In particular, the invention concerns a method that allows largest possible number of people to be warned of the imminent occurrence of seismic events at least a few seconds in advance.

### Background art

To date, there are no functioning systems capable of warning people of the imminent occurrence of seismic events sufficiently in advance.

There are various studies and/or projects of seismic warning systems, but the related methods of transmitting the alarm information, based only on mobile phone frequencies, whether of voice or of Internet type, do not allow people to be reached with certainty and sufficiently in advance. In fact, mobile phone frequencies are affected by the transmission bandwidth available that, although fast, could employ more than the available real time to reach people with the alarm information.

Systems and/or devices that receive-transmit signals and/or warning messages of various type are already known within the context of the specific background art.

The document EP2768207A1 discloses a portable terminal for receiving warning messages of various type (seismic, weather, urban, etc.), comprising
- a first unit for receiving warning messages sent from a first transmission system, of the electronic mail services type transmitted on mobile phone networks, associated with a respective decoding unit;
- a second unit for receiving warning messages sent from a second transmission system, of the television broadcast type transmitted on digital terrestrial networks associated with a respective decoding unit;
- an interface for viewing warning messages received by said first or second receiving unit and decoded by said first or second decoding unit.

The terminal described in the document EP2768207A1 has the important negative point of exploiting transmission systems that do not guarantee rapid and certain reception of the warning messages by the users. In fact, it is known that an electronic mail message can require even several minutes to be delivered to the recipient, just as a video signal can require several seconds before being displayed, as a function of the quality of the transmission channel and/or the transmission bandwidth assigned thereto. Moreover, using video signals for the transmission of the warning messages inevitably causes rapid depletion of the power supply battery of the aforesaid receiving terminal, a situation that is not desirable in emergency conditions.

The document US2018329377A1 discloses a system for the emergency shut off of utilities such as electricity, water, etc., to individuals or institutions following the detection of seismic events, comprising:
- a monitoring network, adapted to transmit, via radiofrequency networks and/or via wired or wireless Internet networks and/or via mobile or satellite phone networks, emergency shut-off signals of utilities such as electricity, water, etc., to individuals or institutions following the detection of seismic events;
- control units, associated with metering devices of said utilities;
- receiving modules of shut-off signals of said utilities, integrated in said control units;
- shut-off mechanisms of said utilities, integrated in said control units, communicating with said receiving modules.

The system described in the document US2018329377A1 has the considerable limit of providing for the transmission of emergency shut-off signals of various types of utilities (electricity, water, etc.) when seismic events occur, but without simultaneously transmitting seismic warning messages to the owners of these utilities.

The document EP0967493A1 discloses an earthquake warning system, comprising:
- a network of sensors, adapted to detect and transmit, via radio and/or satellite and/or cable connections, information concerning the magnitude of seismic waves detected at and/or near the epicentre of generation;
- a control station, adapted to receive the information coming from said network of sensors to process and transmit seismic warning messages and/or signals to the population, via telephone and/or television devices and/or automated sirens.

The system described in the document EP0967493A1 has the important disadvantage of using a seismic data detection network consisting of sensors powered by non-rechargeable electric batteries, which require to be replaced at regular intervals, for the optimal efficiency of the aforesaid detection network.

The document JP2009146098A discloses a seismic alarm device, comprising:
- means for receiving information concerning the magnitude and propagation times of seismic waves detected by a monitoring network;
- processing means of seismic warning voice messages and/or acoustic signals, of a complexity and duration compatible with the propagation times of the seismic waves detected by said monitoring network;
- generation means of said seismic warning voice messages and/or acoustic signals.

The device described in the document JP2009146098A has the evident limit of receiving and transmitting seismic warning messages only within the domestic environments in which they are installed.

The document US2018/376314A1 describes a distributed seismic system which collectively harnesses sensor data from smartphones to determine earthquake onset, and generate warnings (annunciation e.g., audio, visual, tactile, or any combination thereof) through the self-same phone network. The system can record magnitude 2.5 or larger earthquakes, and provides on-phone detection capability to separate earthquake shake data from other every-day shakes of the phone. The earthquake data is collected at a central site where a network detection algorithm confirms that an earthquake is underway and estimates the location and magnitude in real-time. This information is used to issue an alert of forthcoming ground shaking, such as through the network of phones for an early earthquake warning system.

### Presentation of the invention

The object of the invention is to overcome these substantial problems of prior art seismic warning systems, in the study or design stage.

The object of the invention is achieved with a warning method for warning of the imminent occurrence of seismic events using a system according to the main independent claim 1. Further features of the system of the invention are described in the dependent claims.

The method of the invention allows individuals or entire communities to be warned of the imminent occurrence of seismic events by means of receivers of alarm signals, portable or fixed, interacting with different types of transmission (fixed or mobile phones, satellite phones, the Internet, radio waves generated by radio and/or television stations broadcasting nationally), on which a specific software application is installed.

The method of the invention allows individuals or entire communities to be warned of the imminent occurrence of seismic events a few seconds in advance, to give them time, as far as possible, to activate protection systems or to reach safe places.

The method of the invention bases its operation on the detection of sounds of seismic origin that, generated in the epicentre of the seismic event, are almost never audible to the human ear but are transmitted to the surface at a higher speed than the dynamic phenomenon produced by the seismic event itself.

The depth of the dynamic phenomenon is variable and consequently its warning time also varies. In fact, the distance from the epicentre increases the warning time, which also varies according to the depth of the epicentre and to the geological composition of the layers that separate the epicentre from the surface.

Therefore, the present invention consists in a method that warn individuals or whole communities, in a few tenths of a second from the detection point to the final user, through different transmission technologies, of the imminent occurrence of a seismic event.

The present invention bases its efficacy on obtaining the maximum possible communication speed between a network of detection stations of seismic events and a control centre and between said control centre and a plurality of receivers of seismic alarm messages, fixed (arranged on or inside buildings) and/or portable (possessed by individual system users).

Communications between the detection stations and the control centre take place via dedicated phone lines, adapted to maintain said stations and said centre in direct and constant contact with each other, so that communications between said stations and said centre are always operational and are never subject to delays dependent on selection and/or switching procedures between different lines.

Communications between detection stations and the control centre provide for sending information concerning the seismic event detected, suitably coded and structured to allow its transmission at the maximum speed allowed by phone lines, dedicated or not.

Communications between the control centre and the receivers of seismic alarm messages take place via electronic mail services and/or instant messaging services and/or streaming services, with variable reception times, but also and above all via radio and/or television stations that broadcast nationally continuously, with almost instantaneous reception (i.e., more or less in real time).

Communications between the control centre and the receivers provide for sending a seismic alarm message, suitably coded and structured to allow insertion into signals that can be managed by the transmission means associated with the system and consequent transmission in said signals at the maximum speed allowed by said transmission means.

Laboratory tests have shown how the method of the invention is able to guarantee that between detection, by the network of detection stations, of a seismic event and reception, by the receivers, of the seismic alarm message, processed by the control centre, an interval of time quantifiable in a few tenths of a second elapse. The system used in the method of the invention substantially comprises:
- a series of autonomous detection stations located in the territory to be monitored, positioned according to an irregular polygonal mesh, with a side of a few kilometres;
- a control centre, at regional or national level, with the ability to distribute the seismic alarm signals sent by the detection stations towards fixed or mobile receivers;
- fixed or mobile receivers, possessed by the users, of the type comprising fixed or mobile phone device, tablets, personal computers, television sets, etc.;
- a software application, installed on the receivers, with the ability to receive the seismic alarm signals from the control centre and send an acoustic and/or vibration alarm.

The system provides for two different types of detection stations. The first has a mobile phone device installed inside it, so as to operate only within the mobile phone frequency reception range. The second has a satellite phone device installed inside it, so as to operate in all the other possible scenarios.

The first type of station substantially comprises:
- ambient sensors and instruments;
- acoustic sensors, to detect sounds of seismic origin;
- inertial sensors, to detect dynamic phenomena of seismic origin;
- a mobile phone device;
- a receiver-transmitter radio apparatus;
- an electronic processor associated with the mobile phone device and with the receiver-transmitter radio apparatus, to communicate via telephone, the Internet or radio, with other detection stations and/or with the control centre;
- electromechanical devices to automatically re-start the mobile phone device and the electronic processor, in the event of blockage;
- photovoltaic panels with storage batteries, to electrically power the components listed;
- a cover, to contain the components listed.

The second type of detection station comprises the same components as the first, with the exception of:
- a satellite phone device with a dedicated antenna, alternative to the mobile phone device and to the receiver-transmitter radio apparatus.

The second type of detection station can be totally alternative to the first.

Each detection station communicates with the control centre with two different modes: one ordinary, through the radio frequencies of the mobile phone and the correlated internet bandwidth, and one emergency, which in turn provides for two different procedures.

The first emergency mode provides for an immediate phone call and the transmission of a seismic alarm signal, with an acoustic tone code, between the detection station that first receives a sound of seismic origin and a fixed phone of the control centre.

The second emergency mode provides for an always-on phone call, to reduce the time required for the call and for transmission of the seismic alarm signal itself, with an acoustic tone code.

The control centre re-transmits the seismic alarm signal to the receivers of the users with two different modes.

The first mode provides for transmission of the seismic alarm signal with a text message, through the radio frequencies of the mobile phone.

The second mode provides for sending the seismic alarm signal, with microwave transmissions, towards radio and/or television stations that broadcast continuously, located throughout the territory served by the detection stations, which will broadcast the aforesaid signal in real time during their programming.

Users can select a preferred radio and/or television station with the software application of the receivers they possess.

The software application of the receivers provides for two different modes of receiving the seismic alarm signal transmitted by the radio or television stations, which provide different receiving times.

In receivers that are able to pick up the radio or television station selected by the users, the software application provides for:
- maintaining this radio or television station tuned;
- recognizing the acoustic tone coded seismic alarm signal transmitted by this radio or television station and decodes the detection station from which it was sent, the magnitude of the earthquake and the time;
- after recognizing the seismic alarm signal, sending an acoustic and/or vibration alarm.

In receivers that are not able to pick up the radio or television station selected by the users, the software application provides for:
- receiving this radio or television station in streaming, via the Internet;
- recognizing the seismic alarm signal transmitted by this radio or television station;
- after recognizing the seismic alarm signal, sending an acoustic and/or vibration alarm.

In these receivers, the software application will activate the acoustic alarm with a certain delay with respect to the others, but will allow the seismic alarm signal to be taken to the points reached by the fixed lines for connection to the internet, with or without Wi-Fi, thereby making it possible to considerably expand the territory that can be reached by the system.

Analogously, it is possible to transmit the seismic alarm signal to users who possess receivers of satellite type.

The system as described thus allows the largest possible number of people to be warned of the imminent occurrence of a seismic event in a given territory and, consequently, makes it possible to greatly reduce the number of injured and victims potentially caused by this seismic event.

### Brief description of the drawings

Further features and advantages of the invention will be more evident from the more detailed description set forth below, with the aid of the drawings showing preferred embodiments, illustrated by way of non-limiting example, wherein:
- Fig.1 schematically shows a network of detection stations of a warning system for warning of the imminent occurrence of seismic events, according to the invention;
- Fig.2 schematically shows the operating principle of the system in seismic alarm condition;
- Fig.3 schematically shows the operating principle of the system in normal condition;
- Fig.4 schematically shows the transmission method, of tone type, of seismic alarm data;
- Fig.5 shows an axonometric view of the structural conformation of a first detection station of the system, operating on a mobile phone network;
- Fig.6 shows an axonometric view of the structural conformation of a second detection station of the system, operating on a satellite phone network.

### Detailed description of a preferred embodiment of the invention

The main components of the system are the detection stations 2, the control centre 3 and the receivers 5 and 6 with the software application that allows activation of the acoustic or vibration alarm installed. These receivers 5 and 6 are, for example, smartphones, tablets, personal computers or television sets normally for sale, which can be connected to the frequencies of the mobile or fixed phone and to the related Internet bandwidth, suitable or not for satellite phone, and provided or not with the ability to receive radio stations or television channels.

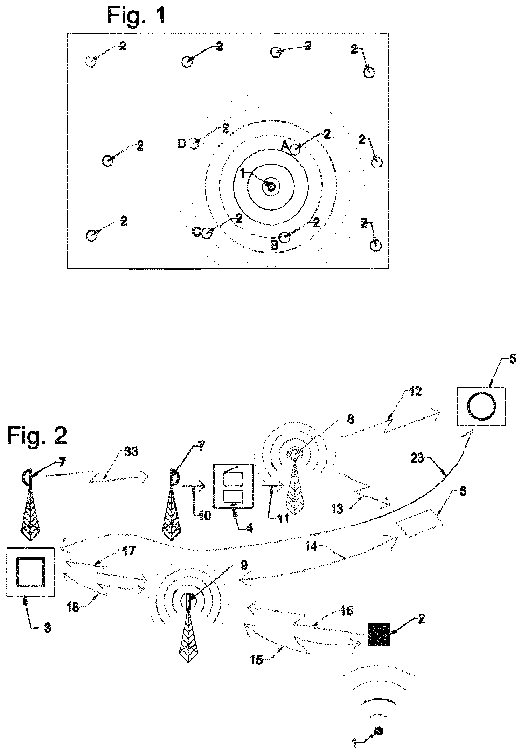

Fig.1 schematically represents a possible irregular polygonal mesh in which the detection stations 2 can be installed. The irregular nature of the mesh depends on the geographical and orographical features of the territory monitored, the choice of which also depends on the need to install the stations preferably on the structure of existing buildings, a few metres from the ground, to have free access in the event of maintenance works.

With reference to Fig. 1, an earthquake 1 will occur closer to a given detection station 2 with respect to the others, for example 2A. When this occurs, this detection station 2A, in addition to the procedures described previously, asks the detection stations 2B, 2C and 2D, through a text message sent via the mobile phone device 26, the satellite phone device 43 or the receiver-transmitter radio apparatus 34, to receive the exact time at which they recorded the earthquake 1 with the inertial sensors 35. At this point, the processor 28 of the station 2A, knowing the exact geographical position and altitude of the other stations, determines, with its own management software, the geographical coordinates and the depth of the epicentre of the earthquake 1, and communicates these to the control centre 3, with a text message. This text message is sent via the mobile or satellite phone network, with the direction of the data flows 16, towards the nearest antenna 9 and, from this, with the direction of the data flows 17, towards the control centre 3. As in the case of seismic alarm, the processor 28 can send the communication also with a message 32 of tone type, communicating at least three distinct series of tones, in which two correspond to the geographical coordinates and one to the depth of the earthquake 1.

After installation and activation of the connection with the control centre 3, each detection station 2 will start a period of adaptation and regulation of the sensors to two important parameters that characterize the geological layers of the place in which it is located, i.e. to the speed of the sound in the underlying layers of the ground and to the average speed of the dynamic event among those recorded. This will be possible by recording minor seismic events that do not give cause for alarm but are very frequent, thereby allowing episodes that can generate small sound events and dynamic events of anthropogenic nature to be excluded from the alarm procedure.

During the normal operation of the system, communications between each detection station 2 and the control centre 3 will take place via the Internet, using the mobile phone frequencies.

Fig. 2 schematically represents the two procedures for transmitting the data of an earthquake 1. The data transmission speed is essential but can be influenced by various factors linked to the traffic on phone lines and to the transmission bandwidth available for the Internet. Therefore, the mobile phone device 26 of the detection stations 2 can have an always-on phone connection with a fixed receiver of the control centre 3 or make a call with this receiver, passing through the nearest antenna 9 of the mobile phone frequencies.

The term "always-on phone connection" means that it is possible to send telephone transmissions on dedicated phone lines, adapted to maintain the detection stations 2 and the control centre 3 in direct and constant contact with each other, so that communications between said detection stations 2 and said control centre 3 are always operational and never subject to delays dependent on selection and/or switching procedures between different lines.

When the acoustic sensors 30 receive an acoustic phenomenon of seismic origin, the nearest detection station 2 sends a message 32, with tones in rapid succession, with the direction of the data flow 15, towards the nearest antenna 9 of the mobile phone frequencies and from this, with the direction of the data flow 18, towards the control centre 3. This message contains the number of the detection station 2, for location, the magnitude of the earthquake 1, in the reference scale used, and the time, up to fractions of a second.

The coding and extremely compact structure of this message allows its transmission at the maximum speed allowed by phone lines, at the disposal of the detection stations 2 and/or of the control centre 3.

This procedure requires around 1/10 of a second to reach the processor of the control centre 3 which, at this point, adopts two different procedures, to inform the receivers 5 and 6, which start simultaneously but finish at different times. One procedure provides for conversion of the tone message 32 into a coded radio signal that is sent via the radio repeaters 7, with the direction of the data flow 33, to all the radio and/or television stations enabled 4, with the direction of the data flow 10, which have uninterrupted programming in the territory in which the detection stations 2 are located.

The coding and the extremely compact structure of the tone message 32 allow it to be inserted easily in the signal managed by the repeaters 7 and by the radio and/or television stations 4 and consequent transmission in said signal at the maximum speed allowed by said repeaters 7 and by said radio and/or television stations 4.

These radio and/or television stations 4 broadcast, by means of their antennas 8, with the direction of the data flow 11, this signal during the normal programming, with or without a very brief interruption, in approximately 1/10 of a second. This signal can be received by the fixed receivers 5, with the direction of the data flow 12, and by the mobile receivers 6, with the direction of the data flow 13, provided with the ability to pick up radio stations. A radio or television station among those enabled is selected and kept tuned by the user via the software application installed in the devices 5 and 6. This application, picking up the signal of the selected radio or television station, based on the selections made by the user, can activate the sound and/or vibration alarm of the receivers 5 and 6, also starting a count-down that defines the estimated time of arrival of the dynamic phenomenon of the earthquake 1. With this mode, the message sent by the first detection station 2 can reach the receivers 5 and 6 in approximately 3/10 of a second and can reach the receivers 5 and 6 even if they are located in places in which there might be poor mobile phone reception, but good reception of the enabled radio or television stations 4.

The receivers 5 and 6 that do not have the ability to receive radio or television stations can receive the same message from the same radio or television station in streaming, or with a text message, passing through the fixed line 23 or, with the direction of the flow 17, passing through the nearest antenna 9 of the mobile phone frequencies, and from here, with the direction of the data flow 14, to the receivers 5 and 6, but employing more time.

In the period in which an earthquake 1 is in progress with an alarm underway, also the communications of the control centre 3 towards the detection stations 2 take place via the Internet bandwidth of the mobile phone frequencies, with the antennas 9 and the direction of the data flow 17, and from here, with the direction of the data flow 16, towards the detection stations 2.

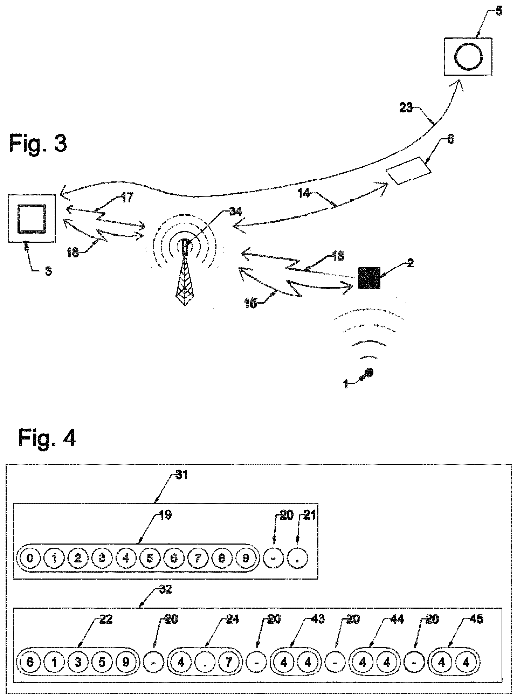

Fig.3 schematically represents the normal communication mode between the detection stations 2, the control centre 3 and the receivers 5 and 6, when all the communications take place via the Internet bandwidth of the fixed and mobile phone radio frequencies, as the time employed is not relevant.

Fig.4 schematically represents, according to the claimed invention, the method for transmission from the detection stations 2 to the control centre 3 of the tone message 32 containing the data of the earthquake 1.

This is a set of twelve tones 31, different from one another, which respectively identify:
- the symbols 19 of the numbers zero to nine;
- the space symbol 20;
- the comma symbol 21.

This tone message 32 thus comprises:
- a series of tones 22, which represent the identification number of a detection station 2;
- a series of tones 24, which represent the magnitude of the earthquake 1, on the chosen measurement scale;
- three series of tones 43, 44, 45, which represent the minutes, seconds and hundredths of a second respectively of the current time.

The series of tones 22, 24 and 43, 44, 45 are spaced apart by a space tone 20, while the tones of the series 24 are separated by a comma tone 21.

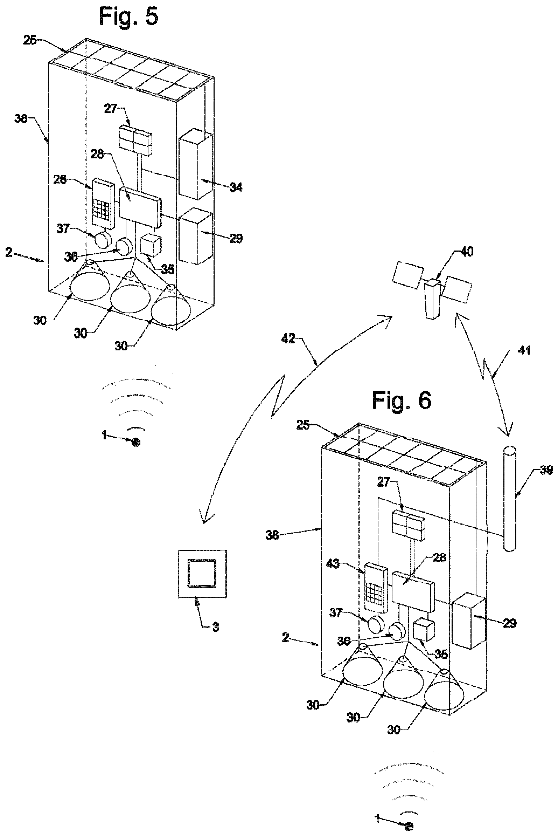

The tone coding and the extremely compact structure of the message 32 allow its transmission at the maximum speed allowed by phone lines, dedicated or not, and easy insertion in signals managed by repeaters 7 and by radio and/or television stations 4 and consequent transmission in said signals at the maximum speed allowed by said repeaters 7 and by said radio and/or television stations 4. Fig. 5 schematically represents a detection station 2 comprising:
- ambient sensors and instruments 27;
- acoustic sensors 30;
- inertial sensors 35;
- a mobile phone device 26;
- a receiver-transmitter radio apparatus 34;
- a electronic processor 28;
- electromechanical devices 36 and 37, to automatically re-start the phone device 26 or satellite device 43 and/or the electronic processor 28 respectively, in the event of blockage;
- solar panels 25 with storage batteries 29, to electrically power the components listed;
- an insulated cover 38, to contain the components listed and allow them to operate in an outdoor environment.

The ambient sensors and instruments 27 comprise compasses, internal and external thermometers, meters for measuring the relative humidity of the internal and external air, barometers, internal humidity regulators, fans for exchange and/or cooling of the internal air, electric resistances for heating the internal air, etc.

The acoustic sensors 30, of microphone type, with or without condensers, pick up the acoustic phenomenon of the earthquake 1, in the entire sound spectrum with which it occurs.

The inertial sensors 35, with three axes, detect the dynamic phenomenon of the earthquake 1.

The receiver-transmitter radio apparatus 34 allows the data of the acoustic phenomenon and of the dynamic phenomenon of the earthquake 1 to be exchanged with other detection stations 2 and/or these data to be communicated to the control centre 3. The same operations can be carried out by sending and/or receiving text messages via the mobile phone device 26.

The processor 28 is connected to the mobile phone device 26 and to the receiver-transmitter radio apparatus 34 to communicate via telephone, on phone lines, dedicated or not, or via the Internet or via radio with other detection stations 2 and/or with the control centre 3.

The electronic processor 28 comprises a management software adapted to establish the epicentre of the earthquake 1 from the data of the related acoustic and dynamic phenomenon, provided by the detection stations 2.

Fig.6 schematically represents a detection station 2 comprising a satellite phone device 43, alternative to the mobile phone device 26 and to the receiver-transmitter radio apparatus 34. An external antenna 39 is positioned near this station so that it can receive and transmit via satellite network. The other functions and the other components of this station remain the same and it can be alternative to the one in Fig.5 or can be installed in sites not reached by fixed or mobile phone signals or radio station broadcast.

The control centre 3 allows control of the maintenance of the detection stations 2 and indexed storage of the data recorded by them, so as to make them available for studies and research and allow very detailed territorial analysis, given the large number of detection stations 2 in the territory monitored. The control centre 3 comprises the hardware required for real time control of each detection station 2, fixed phone receivers, one for each detection station 2, antennas 7 with one or more repeaters of radio messages towards other antennas, with a repeater at each radio or television station 4 enabled.

The detection stations 2 are always operational and collect the data of all the seismic events detectable by their sensors, which are sent periodically, with the mobile phone radio frequency, with the existing Internet bandwidth, to the control centre 3, to be indexed, catalogued and stored.

Each detection station 2 comprises two types of sensors. The first comprises acoustic sensors 30, capable of picking up acoustic waves P, while the second comprises inertial sensors 35, capable of picking up dynamic waves S.

Each detection station 2 is completely independent from the point of view of power supply, as it comprises photovoltaic panels and electric storage batteries, suitably sized to allow them to operate also during the night or in cloudy conditions.

Each detection station 2 comprises sensors and instruments 27 that measure the internal and external temperature, the internal and external relative humidity, the charge level of the storage batteries 29, the operation of the photovoltaic panels 25 and regulate the internal microclimate by means of fans for cooling and electric resistances for heating, and electromechanical devices 36 and 37 for resetting the mobile phone 26 or satellite 43 device and the electronic processor 28. Each function of the components listed is controlled by the control centre 3, so as to rapidly manage any controls or technical maintenance operations remotely.

When the sensors 30 of a detection station 2 detect the acoustic phenomenon of an earthquake 1, the processor 28, through an instantaneous call with the mobile phone device 26, or with an always-open call, notifies the control centre 3 with an acoustic code message 32, of tone type. The term "always-open call" means a telephone transmission sent on dedicated phone lines, adapted to maintain the detection stations 2 and the control centre 3 in direct and constant contact with one another, so that communications between said detection stations 2 and said control centre 3 are always operational and are never subject to delays dependent on selection and/or switching procedures between different lines.

This acoustic message lasts around 1/10 of a second and contains three data: the number of the detection station 2 from which the geographical position is obtained, the estimated magnitude of the earthquake 1, the time of the earthquake 1, for briefness, in minutes, seconds and tenths of a second within the current hour.

The coding and extremely compact structure of this acoustic message allows its transmission at the maximum speed allowed by phone lines, dedicated or not, at the disposal of the detection stations 2 and/or of the control centre 3.

The control centre 2 only sends the acoustic message of the first detection station 2 that communicated the first seismic event in a given area to the radio and/or television stations 4 enabled, and via the Internet, directly to the receivers 5 and 6. The same procedure will take place with the subsequent seismic events relating to a single context.

In fact, a first seismic event of strong magnitude can be followed by others in a short space of time, with epicentre near the first. The procedure will therefore be identical to the first seismic event in the same area, which can be defined by a certain number of detection stations 2, arranged around the first that detected the first acoustic phenomenon.

The first detection station 2 that detects, through the inertial sensors 35, the dynamic phenomenon of an earthquake 1, communicates with the adjacent detection stations 2 via the mobile phone device 26 and/or the receiver-transmitter radio apparatus 34, so as to exchange the data relating to the reception of each seismic event in progress and determine, with the management software of the processor 28, the exact geographical position and altitude of the epicentre and communicate this to the control centre 3, which in turn will communicate this to the users with the same communication procedure as the acoustic phenomenon.

All other communications of each detection station 2 with the control centre 3 take place through the internet bandwidth using the radio frequencies of the mobile phone.

When the control centre 3 receives from a detection station 2 a tone message 32, indicating that it has detected from the acoustic sensors 30 an acoustic phenomenon relating to an imminent dynamic phenomenon of an earthquake 1, the procedure to notify the users described above starts and immediately determines the area involved.

Subsequently, when the dynamic phenomenon arrives, the first detection station 2 that receives it, with an automated request receives the data relating to the magnitude and to the time of the earthquake 1 from the detection stations 2 surrounding it and, through the time differences with the previous acoustic phenomenon, determines the exact position and depth of the epicentre through the management software of the processor 28, which takes account of the geographical position and altitude of each detection station 2 considered.

Each detection station 2 is installed on walls of existing buildings or objects capable of accommodating it. Their position is studied so that the average distance between the stations does not exceed a given value and their network is not too irregular. Their geographical position and altitude will also be precisely defined so as to be utilized to determine the epicentre of a seismic event.

The software application of the receivers 5 and 6 is programmable by the user to remain in contact with the control centre 3 through the internet constantly updating the status, to receive only the information of one site or from all, to regulate the power of the sound or vibration alarm.

In the event of a seismic event, if the receivers 5 and 6 remain integral, they can be a valid medium for locating users who, through them can send brief information on their condition so as to initiate adequate rescue operations. The same control centre 3 can produce a map with the position of all the receivers 5 and 6 active prior to the earthquake 1 or deactivated following it.

### Legend of the details of the figures

1- earthquake;
2- seismic detection stations;
3- control centre;
4- radio or television station that broadcasts nationally continuously;
5- fixed receivers provided with software application;
6- mobile receivers provided with software application;
7- microwave transmission antenna;
8- antenna for radio or television distribution;
9- mobile phone antenna;
10- direction of the data flow via radio between antennas 7 and radio or television stations 4;
11- direction of the data flow via radio between radio or television stations and antennas 8;
12- direction of the data flow via radio between antennas 8 and receivers 5;
13- direction of the data flow via radio between antennas 8 and receivers 6;
14- direction of the data flow via mobile phone between antennas 9 and receivers 6;
15- direction of the data flow of tone type 19 between detection stations 2 and antennas 9;
16- direction of the data flow via web between detection stations 2 and antennas 9;
17- direction of the data flow via web between antennas 9 and the control centre 2;
18- direction of the data flow of tone type 19 between antennas 9 and the control centre 3;
19- series of acoustic tones to indicate the symbols of numbers zero to nine;
20- acoustic tone to indicate the space symbol;
21- acoustic tone to indicate the comma symbol;
22- example of series of tones 19, corresponding to the identification numbers of the detection stations 2;
23- connection web from fixed line;
24- example of series of tones 19 and 21, corresponding to the magnitude of the earthquake 1 according to the reference scale selected;
25- photovoltaic panels for producing the electricity required for the detection stations 2;
26- mobile phone device for communications between detection stations 2 and between detection stations 2 and the control centre 3;
27- sensors and instruments for controlling and maintaining the internal climate of the detection stations 2;
28- electronic processor for the remote management and monitoring of the detection stations 2 from the control centre 3, with its own system and operating memory;
29- storage batteries for electricity of the photovoltaic panels 25;
30- acoustic sensors to pick up sounds of seismic origin, on different bandwidths, audible or not audible to the human ear;
31- complete series of acoustic tones utilizable by the mobile phone device 26 to communicate, via telephone connection, with the control centre 3;
32- example of series of tones sent from the mobile phone device 26 to the control centre 3, which identifies the number of the detection station and the magnitude and the time of the earthquake 1 recorded by the acoustic sensors 30 thereof;
33- direction of the data flow via radio between antennas 7 and radio stations 4;
34- receiver-transmitter radio apparatus;
35- inertial sensors, with three axes, regulated to recognize the dynamic power of the earthquake 1;
36- electromechanical device adapted to the mobile 26 or satellite 43 phone device for the respective automatic re-start in the event of blockage;
37- electromechanical device adapted to the electronic processor 28 for its automatic re-start in the event of blockage;
38- covers for containing the internal components of the detection stations 2;
39- satellite phone antennas;
40- communication satellites;
41- direction of the data flow between satellites 40 and detection stations 2;
42- direction of the data flow between satellites 40 and the control centre 3;
43- satellite phone devices.

## Claims

1. Warning method for warning of the imminent occurrence of seismic events (1) using a system comprising:
- detection stations (2) for detecting acoustic and dynamic phenomena of seismic events (1), adapted to generate and transmit seismic alarm messages (32) and comprising an electronic processor (28);
- a control centre (3), adapted to receive seismic alarm messages (32) from the detection stations (2) and distribute them towards receivers (5, 6);
- receivers (5, 6), fixed or mobile, possessed by the system users;
- a software application, installed in the receivers (5, 6), adapted to receive seismic alarm messages (32) from the control centre (3) and to generate alarm signals that can be perceived by the users,
**characterized in that** said warning method using the system comprises the step of:
- using the processor (28) of the detection station (2) to communicate a seismic alarm message (32) of the tone type code at least between said detection stations (2) and said control centre (3),
wherein said seismic alarm messages (32) comprise:
- a series of tones (22), which represent the identification number of the detection station (2) that has detected the earthquake (1);
- a series of tones (24), which represent the magnitude of the earthquake (1), on the chosen measurement scale;
- three series of tones (43, 44, 45), which represent the minutes, seconds and hundredths of a second respectively of the time of the earthquake (1).

2. The method according to claim 1, **characterized in that** the system comprises mobile phone antennas (9), adapted to allow:
- communications between the detection stations (2) and the control centre (3), by means of data flows (15, 16 and 17, 18), of tone type and web type;
- communications between the control centre (3) and receivers (6), by means of data flows (14).

3. The method according to claim 1, **characterized in that** the system comprises radio wave antennas (7, 8), adapted to allow:
- communications between the control centre (3) and radio and/or television stations (4), by means of data flows (33, 10);
- communications between radio and/or television stations (4) and receivers (5, 6), by means of data flows (11, 12, 13).

4. The method according to claim 1, **characterized in that** the system comprises means adapted to allow:
- communications between the control centre (3) and receivers (5), by means of web type data flows (23).

5. The method according to claim 1, **characterized in that** the system comprises satellite antennas 39, adapted to allow:
- communications between the detection stations (2) and the control centre (3).

6. The method according to claim 1, **characterized in that** said detection stations (2) comprise:
- ambient sensors and/or instruments (27);
- acoustic sensors (30), adapted to pick up the acoustic waves P produced by the acoustic phenomenon of the earthquake (1);
- inertial sensors (35), adapted to pick up the dynamic waves S produced by the dynamic phenomenon of the earthquake (1);
- a mobile phone device (26);
- a receiver-transmitter radio apparatus (34);
- electromechanical devices (36, 37), adapted to automatically re-start the phone device (26) or satellite device (43) and/or electronic processor (28) in the event of blockage;
- solar panels (25) with storage batteries (29), adapted to electrically power the components listed;
- an insulated cover 38, adapted to contain the components listed.

7. The method according to claim 6, **characterized in that** said detection stations (2) comprise a satellite phone device (43).

8. The method according to claim 6, **characterized in that** said sensors and the ambient instruments (27) of the detection stations (2) comprise:
- internal and external thermometers;
- meters for measuring the relative humidity of the internal and external air;
- internal humidity regulators;
- fans for exchange and/or cooling of the internal air;
- electric resistances for heating the internal air;
- meters for measuring the energy efficiency level of the photovoltaic panels (25) and the charge level of the storage batteries (29);
- compasses and barometers.

9. The method according to claim 6, **characterized in that** said electronic processor (28) comprises means for connection to mobile phone devices (26, 43) and to receiver-transmitter radio apparatuses (34), adapted to allow communications via telephone, satellite, the Internet or radio, with other detection stations (2) and/or with the control centre (3).

## Patentansprüche

1. Warnverfahren zur Warnung vor dem bevorstehenden Auftreten von seismischen Ereignissen (1) unter Verwendung eines Systems, das Folgendes umfasst:
- Erfassungsstationen (2) zur Erfassung akustischer und dynamischer Phänomene seismischer Ereignisse (1), die zur Erzeugung und Übertragung seismischer Alarmmeldungen (32) geeignet sind und einen elektronischen Prozessor (28) umfassen;
- ein Kontrollzentrum (3), das so beschaffen ist, dass es seismische Alarmmeldungen (32) von den Erfassungsstationen (2) empfängt und sie an Empfänger (5, 6) weiterleitet;
- feste oder mobile Empfänger (5, 6), die sich im Besitz der Systemnutzer befinden;
- eine Softwareanwendung, die in den Empfängern (5, 6) installiert ist und geeignet ist, seismische Alarmmeldungen (32) vom Kontrollzentrum (3) zu empfangen und Alarmsignale zu erzeugen, die von den Benutzern wahrgenommen werden können, **dadurch gekennzeichnet, dass** das Warnverfahren unter Verwendung des Systems den folgenden Schritt umfasst:
- Verwenden des Prozessors (28) der Erfassungsstation (2), um eine seismische Alarmmeldung (32) des Tontypcodes zumindest zwischen den Erfassungsstationen (2) und dem Kontrollzentrum (3) zu übermitteln, wobei die seismischen Alarmmeldungen (32) Folgendes umfassen:
- eine Reihe von Tönen (22), die die Identifikationsnummer der Erfassungsstation (2) darstellen, die das Erdbeben (1) erfasst hat;
- eine Reihe von Tönen (24), die die Stärke des Erdbebens (1) auf der gewählten Messskala darstellen;
- drei Tonfolgen (43, 44, 45), die die Minuten, Sekunden bzw. Hundertstelsekunden der Dauer des Erdbebens (1) darstellen.

2. Verfahren nach Anspruch 1, **dadurch gekennzeichnet, dass** das System Mobiltelefon-Antennen (9) umfasst, die geeignet sind, Folgendes zu ermöglichen:
- Kommunikation zwischen den Erfassungsstationen (2) und dem Kontrollzentrum (3) über Datenflüsse (15, 16 und 17, 18) der Tonart und Webtyp;
- Kommunikation zwischen dem Kontrollzentrum (3) und den Empfängern (6) mittels Datenflüssen (14).

3. Verfahren nach Anspruch 1, **dadurch gekennzeichnet, dass** das System Radiowellen-Antennen (7, 8) umfasst, die geeignet sind, Folgendes zu ermöglichen:
- Kommunikation zwischen dem Kontrollzentrum (3) und den Radio- und/oder Fernsehstationen (4) mittels Datenflüssen (33, 10);
- Kommunikation zwischen Radio- und/oder Fernsehsendern (4) und Empfängern (5, 6) mittels Datenflüssen (11, 12, 13).

4. Verfahren nach Anspruch 1, **dadurch gekennzeichnet, dass** das System Mittel umfasst, die geeignet sind, Folgendes zu ermöglichen:
- Kommunikation zwischen dem Kontrollzentrum (3) und den Empfängern (5) mittels webbasierter Datenflüsse (23).

5. Verfahren nach Anspruch 1, **dadurch gekennzeichnet, dass** das System Satellitenantennen 39 umfasst, die geeignet sind, Folgendes zu ermöglichen:
- Kommunikation zwischen den Erkennungsstationen (2) und der Leitstelle (3).

6. Verfahren nach Anspruch 1, **dadurch gekennzeichnet, dass** die Erkennungsstationen (2) Folgendes umfassen:
- Umgebungssensoren und/oder -instrumente (27);
- Akustiksensoren (30), die geeignet sind, die durch das akustische Phänomen des Erdbebens (1) erzeugten akustischen Wellen P aufzufangen;
- Trägheitssensoren (35), die geeignet sind, die durch das dynamische Phänomen des Erdbebens (1) erzeugten dynamischen Wellen S aufzufangen;
- ein Mobiltelefon (26);
- ein Funkempfangs- und -sendegerät (34);
- elektromechanische Vorrichtungen (36, 37), die geeignet sind, das Telefongerät (26) oder das Satellitengerät (43) und/oder den elektronischen Prozessor (28) im Falle einer Blockierung automatisch neu zu starten;
- Sonnenkollektoren (25) mit Akkumulatoren (29), die für die elektrische Versorgung der aufgeführten Komponenten geeignet sind;
- eine isolierte Abdeckung 38, die zur Aufnahme der aufgeführten Bauteile geeignet ist.

7. Verfahren nach Anspruch 6, **dadurch gekennzeichnet, dass** die Erfassungsstationen (2) eine Satellitentelefonvorrichtung (43) umfassen.

8. Verfahren nach Anspruch 6, **dadurch gekennzeichnet, dass** die Sensoren und die Umgebungsinstrumente (27) der Erfassungsstationen (2) Folgendes umfassen:
- interne und externe Thermometer;
- Messgeräte zur Messung der relativen Luftfeuchtigkeit der Innen- und Außenluft;
- interne Feuchtigkeitsregulatoren;
- Ventilatoren zum Austausch und/oder zur Kühlung der Innenluft;
- elektrische Widerstände zur Erwärmung der Innenluft;
- Messgeräte zur Messung des Wirkungsgrads der Photovoltaikmodule (25) und des Ladezustands der Akkumulatoren (29);
- Kompasse und Barometer.

9. Verfahren nach Anspruch 6, **dadurch gekennzeichnet, dass** der elektronische Prozessor (28) geeignete Mittel zum Anschluss an Mobiltelefonvorrichtungen (26, 43) und an Empfänger-Sender-Funkvorrichtungen (34) umfasst, um die Kommunikation über Telefon, Satellit, Internet oder Funk mit anderen Erfassungsstationen (2) und/oder mit dem Kontrollzentrum (3) zu ermöglichen.

## Revendications

1. Procédé d'alerte pour prévenir de l'imminence d'événements sismiques (1), à l'aide d'un système comprenant :
- des stations de détection (2) des phénomènes acoustiques et dynamiques des événements sismiques (1), aptes à générer et à transmettre des messages d'alarme sismique (32) et comprenant un processeur électronique (28) ;
- un centre de contrôle (3), adapté pour recevoir les messages d'alarme sismique (32) des stations de détection (2) et les distribuer vers les récepteurs (5, 6) ;
- des récepteurs (5, 6), fixes ou mobiles, détenus par les utilisateurs du système ;
- une application logicielle, installée dans les récepteurs (5, 6), adaptée pour recevoir les messages d'alarme sismique (32) du centre de contrôle (3) et pour générer des signaux d'alarme qui peuvent être perçus par les utilisateurs,
**caractérisé par** fait que ledit procédé d'alerte utilisant le système comprend l'étape consistant à :
- utiliser le processeur (28) de la station de détection (2) pour communiquer un message d'alarme sismique (32) du code de type de tonalité au moins entre lesdites stations de détection (2) et ledit centre de contrôle (3),
où ledit message d'alarme sismique (32) comprend :
- une série de tonalités (22), qui représentent le numéro d'identification de la station de détection (2) qui a détecté le séisme (1) ;
- une série de tonalités (24) représentant la magnitude du séisme (1) sur l'échelle de mesure choisie ;
- trois séries de tonalités (43, 44, 45), qui représentent respectivement les minutes, les secondes et les centièmes de seconde de l'heure du séisme (1).

2. Procédé selon la revendication 1, **caractérisé par le fait que** le système comprend des antennes de téléphonie mobile (9), adaptées pour permettre :
- les communications entre les stations de détection (2) et le centre de contrôle (3), au moyen de flux de données (15, 16 et 17, 18), de type tonalité et de type web ;
- les communications entre le centre de contrôle (3) et les récepteurs (6), au moyen de flux de données (14).

3. Procédé selon la revendication 1, **caractérisé par le fait que** le système comprend des antennes à ondes radio (7, 8), adaptées pour permettre :
- les communications entre le centre de contrôle (3) et les stations de radio et/ou de télévision (4), au moyen de flux de données (33, 10) ;
- les communications entre les stations de radio et/ou de télévision (4) et les récepteurs (5, 6), au moyen de flux de données (11, 12, 13).

4. Procédé selon la revendication 1, **caractérisé par le fait que** le système comprend des moyens adaptés pour permettre :
- les communications entre le centre de contrôle (3) et les récepteurs (5), au moyen de flux de données de type web (23).

5. Procédé selon la revendication 1, **caractérisé par le fait que** le système comprend des antennes satellites 39, adaptées pour permettre :
- les communications entre les stations de détection (2) et le centre de contrôle (3).

6. Procédé selon la revendication 1, **caractérisé par le fait que** lesdites stations de détection (2) comprennent :
- des capteurs et/ou instruments environnementaux (27) ;
- des capteurs acoustiques (30), adaptés pour capter les ondes acoustiques P produites par le phénomène acoustique du séisme (1) ;
- des capteurs inertiels (35), adaptés pour capter les ondes dynamiques S produites par le phénomène dynamique du séisme (1) ;
- un dispositif de téléphonie mobile (26) ;
- un appareil radio récepteur-émetteur (34) ;
- des dispositifs électromécaniques (36, 37), adaptés pour redémarrer automatiquement le dispositif téléphonique (26) ou le dispositif satellite (43) et/ou le processeur électronique (28) en cas de blocage ;
- des panneaux solaires (25) avec des batteries de stockage (29), adaptés pour alimenter électriquement les composants énumérés ;
- un couvercle isolé 38, adapté pour contenir les composants énumérés.

7. Procédé selon la revendication 6, **caractérisé par le fait que** les stations de détection (2) comprennent un dispositif de téléphone satellite (43).

8. Procédé selon la revendication 6, **caractérisé par le fait que** les capteurs et les instruments environnementaux (27) des stations de détection (2) comprennent :
- des thermomètres internes et externes ;
- des compteurs pour mesurer l'humidité relative de l'air intérieur et extérieur ;
- des régulateurs d'humidité internes ;
- des ventilateurs pour le renouvellement et/ou le refroidissement de l'air intérieur ;
- des résistances électriques pour le chauffage de l'air intérieur ;
- des compteurs pour mesurer le niveau d'efficacité énergétique des panneaux photovoltaïques (25) et le niveau de charge des batteries de stockage (29) ;
- des boussoles et des baromètres.

9. Procédé selon la revendication 6, **caractérisé par le fait que** le processeur électronique (28) comprend des moyens de connexion à des dispositifs de téléphonie mobile (26, 43) et à des appareils radio récepteurs-émetteurs (34), adaptés pour permettre des communications par téléphone, satellite, Internet ou radio, avec d'autres stations de détection (2) et/ou avec le centre de contrôle (3).
